## Europäisches Patentamt

## European Patent Office

## Office européen des brevets

(19)

(11) Veröffentlichungsnummer: **0 157 317**
A2

(12) # EUROPÄISCHE PATENTANMELDUNG

(21) Anmeldenummer: **85103431.4**

(22) Anmeldetag: **22.03.85**

(51) Int. Cl.⁴: **C 02 F 3/12**

(30) Priorität: **04.04.84 DE 3412553**

(43) Veröffentlichungstag der Anmeldung: **09.10.85**
**Patentblatt 85/41**

(84) Benannte Vertragsstaaten: **BE FR LU NL**

(71) Anmelder: **Fried. Krupp Gesellschaft mit beschränkter Haftung, Altendorfer Strasse 103, D-4300 Essen 1 (DE)**

(72) Erfinder: **Kiese, Siefried, Kaldernstrasse 10, D-4600 Dortmund 41 (DE)**
Erfinder: **Scheffler, Ulrich, Laupendahler Landstrasse 19, D-4300 Essen (DE)**

(54) **Verfahren und Vorrichtung zur biologischen aeroben Reinigung von Abwasser.**

(57) Es wird ein Verfahren zur biologischen aeroben Reinigung von Abwasser beschrieben, bei dem in einer ersten Verfahrensstufe eine Temperatur von 30 bis 60 °C und in einer zweiten Verfahrensstufe eine Temperatur von 20 bis 40 °C herrscht, wobei die Temperatur in der ersten Verfahrensstufe immer grösser als in der zweiten Verfahrensstufe ist, und bei dem ein Teil des Belebtschlamms der zweiten Verfahrensstufe nach seiner Abtrennung in die erste Verfahrensstufe zurückgeführt wird. Das Verfahren hat eine hohe Abbauleistung und erzeugt einen Belebtschlamm mit gutem Sedimentationsverhalten.

EP 0 157 317 A2

0157317

FRIED. KRUPP GESELLSCHAFT MIT BESCHRÄNKTER HAFTUNG

in Essen

Verfahren und Vorrichtung zur biologischen aeroben Reinigung von Abwasser

Die Erfindung bezieht sich auf ein Verfahren zur biologischen aeroben Reinigung von Abwasser, bei dem der Belebtschlamm teilweise im Kreislauf geführt wird, sowie auf eine Vorrichtung zur Durchführung des Verfahrens. Bei der biologischen aeroben Abwasserreinigung werden die im Wasser gelösten bzw. kolloidal vorliegenden organischen Schmutzstoffe durch die Lebenstätigkeit von Mikroorganismen oxidativ abgebaut, wobei dem Abwasser als Oxidationsmittel Luftsauerstoff zugeführt wird. Bei der aeroben biologischen Abwasserreinigung entstehen aus den organischen Schmutzstoffen Kohlendioxid und Wasser als Oxidationsprodukte sowie Belebtschlamm, welcher aus toten sowie lebensfähigen Mikroorganismen und aus nicht abbaubaren sowie mineralisierten Abwasserinhaltstoffen zusammengesetzt ist.

Es ist allgemein üblich, daß die aeroben biologischen Abwasserreinigungsverfahren bei Umgebungstemperatur durchgeführt werden. Es hat aber nicht an Versuchen gefehlt, die Abwasserreinigung auch bei Temperaturen über 45 $^{\circ}$C unter Benutzung von thermophilen Mikroorganismen durchzuführen, da die Geschwindigkeit biochemischer Reaktionen mit steigender Temperatur zunimmt. Diese Versuche haben aber deshalb nur in

0157317

Sonderfällen (Güllestabilisierung) technische Anwendung gefunden, weil bei der aeroben biologischen Abwasserreinigung mit thermophilen Mikroorganismen ein sehr feindisperser Belebtschlamm entsteht, der sehr schlechte Sedimentationseigenschaften aufweist und dessen Entfernung aus dem Abwasser einen erheblichen Aufwand verursacht. Außerdem verhindert die feindisperse Struktur des Belebtschlamms die Bildung einer hohen Biomassekonzentration, wodurch die Oxidationsleistung des Systems herabgesetzt wird. Ferner ist es in der Abwassertechnik allgemein üblich, einen Teil des Belebtschlamms im Kreislauf zu führen, da hierdurch eine gleichbleibend hohe Biomassekonzentration erreicht wird, die bei einer bestimmten Temperatur eine optimale Abbauleistung sicherstellt.

Der Erfindung liegt die Aufgabe zugrunde, ein aerobes biologisches Abwassrreinigungsverfahren zu schaffen, das die erhöhte Abbauleistung thermophiler Mikroorganismen nutzt und gleichzeitig bei hoher Biomassekonzentration einen sedimentationsfähigen Belebtschlamm erzeugt. Der Erfindung liegt ferner die Aufgabe zugrunde, eine zur Durchführung des Verfahrens geeignete Vorrichtung zu schaffen.

Die der Erfindung zugrundeliegende Aufgabe wird dadurch gelöst, daß in einer ersten Verfahrensstufe eine Temperatur von 30 bis 60 °C und in einer zweiten Verfahrensstufe eine Temperatur von 20 bis 40 °C herrscht, wobei die Temperatur in der ersten Verfahrensstufe immer größer als in der zweiten Verfahrensstufe ist, und daß ein Teil des Belebtschlamms der zweiten Verfahrensstufe nach seiner Abtrennung in die erste Verfahrensstufe zurückgeführt wird. Überraschenderweise hat sich gezeigt, daß eine Temperaturwechselbeanspruchung bei einem Belebtschlamm, der zwischen einer wärmeren und einer kälteren Verfahrensstufe zirkuliert, nicht zu Aktivitätsverlusten führt, sondern sehr positive Auswirkungen hinsichtlich wichtiger Prozeßparameter, wie Belebtschlammaktivität, Stoffumsatzraten, Überschußschlammbildung und Sedimentationsverhalten des Belebtschlamms, hat. Durch das erfindungsgemäße Verfahren werden also die im thermophilen Bereich vorhandenen hohen Stoffumsatzraten und eine verminderte Überschußschlammbildung technisch nutzbar gemacht, ohne daß deshalb auch die schlechtere Abtrennbarkeit des für den thermophilen Bereich typischen feindispersen Belebtschlamms vorliegt. Die erfindungsgemäßen Verfahrensparameter gestatten es außerdem, das Verfahren ohne Zufuhr von Energie durchzuführen.

Das erfindungsgemäße Verfahren kann besonders vorteilhaft durchgeführt werden, wenn zwischen der ersten und der zweiten Verfahrensstufe eine Temperaturdifferenz von 5 bis 40 $^{\circ}$C, vorzugsweise 15 bis 25 $^{\circ}$C, herrscht. Diese Temperaturdifferenz führt dazu, daß ein besonders sedimentationsfähiger Belebtschlamm entsteht, der sich leicht aus dem Ablauf der zweiten Verfahrensstufe abtrennen läßt.

Nach der Erfindung ist ferner vorgesehen, daß der in die erste Stufe zurückgeführte Belebtschlamm durch Zufuhr von Luft, Sauerstoff oder Wasserstoffperoxid reaktiviert wird. Durch diese Maßnahme wird erreicht, daß sich die Abblauleistung des zurückgeführten Belebtschlamms erhöht. Ferner ist nach der Erfindung vorgesehen, daß die erste Verfahrensstufe oder beide Verfahrensstufen mit Sauerstoff oder sauerstoffangereicherter Luft betrieben werden. Durch diese Maßnahme wird die Wärmebilanz der ersten Verfahrensstufe verbessert, da die durchströmende Gasmenge verringert wird und damit weniger Wärme austrägt. Die in der ersten Verfahrensstufe bei den Oxidationsreaktionen gebildete Wärme wird also zur Aufrechterhaltung einer optimal

0157317

hohen Reaktionstemperatur benutzt. Schließlich ist nach der Erfindung vorgesehen, daß dem Abwasser Aktivkohle in einer Menge von 5 bis 100 g/l, vorzugsweise 10 bis 30 g/l, zugegeben wird, wodurch erreicht wird, daß sich das Sedimentationsverhalten des Belebtschlamms verbessert und daß sich die Reaktionsgeschwindigkeit der Oxidationsreaktionen durch die katalytische Wirkung der Aktivkohle erhöht.

Die der Erfindung zugrundeliegende Aufgabe wird ferner durch eine Vorrichtung zur Durchführung des Verfahrens gelöst, die aus zwei hintereinandergeschalteten geschlossenen Schlaufenreaktoren mit einem Schlankheitsgrad $>5$ und einer nachgeschalteten Trenneinrichtung zur Abtrennung des Belebtschlamms besteht. Die entsprechend der Erfindung gestalteten Schlaufenreaktoren ermöglichen einen guten Sauerstoffeintrag und eine hohe Sauerstoffausbeute. Außerdem können sie mit einer Wärmeisolation versehen werden, wodurch die Verfahrenstemperatur recht genau eingehalten werden kann. Die Trenneinrichtung kann als Sedimentationsbecken, Dekanter oder Zentrifuge ausgeführt sein und ermöglicht die Abtrennung des Belebtschlamms, so daß aus der Trennvorrichtung ein geklärtes und gereinigtes Abwasser abfließt.

In weiterer Ausgestaltung der Erfindung ist vorgesehen, daß jeder Schlaufenreaktor aus mehreren hintereinandergeschalteten Reaktoren besteht, wodurch eine zu große Anlagenbauhöhe vermieden und der Sauerstoffeintrag optimiert wird. Nach der Erfindung ist vorgesehen, das Verfahren und die Vorrichtung zur Reinigung von hochbelasteten Industrieabwässern anzuwenden.

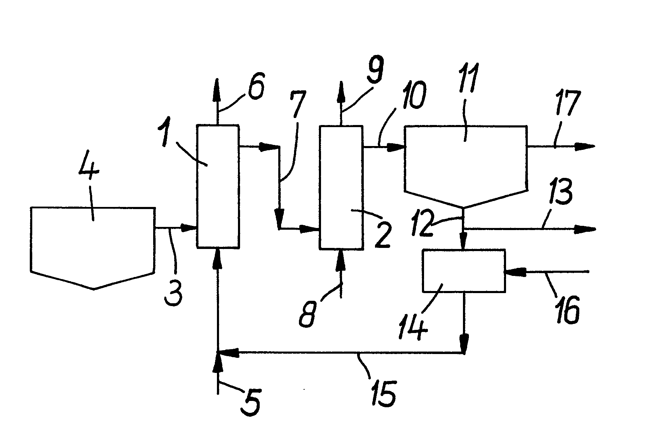

Der Gegenstand der Erfindung wird nachfolgend anhand des in der Zeichnung dargestellten Verfahrensfließbildes näher erläutert. Aus dem Absetzbecken 4, in

0157317

dem das zu reinigende Abwasser gesammelt und von größeren Feststoffteilchen befreit wird, gelangt das Abwasser über die Leitung 3 in den Schlaufenreaktor 1, dem über die Leitung 5 sauerstoffangereicherte Luft zugeführt wird. Über die Leitung 6 verläßt die Abluft den Schlaufenreaktor 1. Das teilweise gereinigte schlammhaltige Abwasser verläßt den Schlaufenreaktor 1 über die Leitung 7 und gelangt in den Schlaufenreaktor 2, dem über die Leitung 8 Luft zugeführt wird. Die Abluft verläßt den Schlaufenreaktor 2 über die Leitung 9. Das Gemisch aus gereinigtem Abwasser und Belebtschlamm verläßt den Schlaufenreaktor 2 über die Leitung 10 und wird in die Trennvorrichtung 11 geführt, wo eine Abtrennung des Belebtschlamms erfolgt. Der Belebtschlamm fließt aus der Trennvorrichtung 11 über die Leitung 12 ab. Ein Teilstrom des Belebtschlamms wird über die Leitung 13 zur Schlammbehandlungsanlage gefördert. Der restliche Belebtschlamm gelangt in die Belüftungsvorrichtung 14 und von dort über die Leitung 15 in den Schlaufenreaktor 1. Die Belüftungsvorrichtung 14 wird über die Leitung 16 mit Luft versorgt. Das geklärte und gereinigte Abwasser verläßt die Trennvorrichtung 11 über die Leitung 17 und gelangt von dort in den Vorfluter.

Das Abwasser einer Backhefefabrik (CSB = 20 000 mg $O_2$/l; $BSB_5$ = 16 000 mg $O_2$/l) wurde nach dem erfindungsgemäßen Verfahren in einer Versuchsanlage gereinigt, wobei in der ersten Verfahrensstufe eine Temperatur von 55 $^O$C und in der zweiten Verfahrensstufe eine Temperatur von 40 $^O$C herrschte. Zum Vergleich wurde das Abwasser bei einer Temperatur von 50 $^O$C in einem einstufigen Verfahren aerob biologisch gereinigt. Dabei wurden folgende Ergebnisse erhalten.

Bei einstufiger Prozeßführung ergab sich für eine Raumbelastung von $B_R$ = 13,5 kg CSB/m³/d und für eine Schlammbelastung von $B_{TS}$ = 0,8 kg CSB/kg TS/d eine Abbauleistung von $\Delta B_R$ = 10,5 CSB/m³/d, entsprechend einer Schlammabbauleistung von $\Delta B_{TS}$ = 0,6 kg CSB/kg/d. Die Gesamtfeststoffkonzentration im geklärten Ablauf der als Eindicker gestalteten Trennvorrichtung betrug 1,7 kg TS/m³ bei einer Klärflächenbelastung von 1,8 kg TS/m²/h. Dagegen waren beim erfindungsgemäßen zweistufigen Verfahren für eine Raumbelastung von $B_R$ = 18 kg CSB/m³/d und für eine Schlammbelastung von $B_{TS}$ = 2,1 kg CSB/kg TS/d die Abbauleistung $\Delta B_R$ = 14,2 kg CSB/m³/d und die Schlammabbauleistung $\Delta B_{TS}$ = 1,7 kg CSB/kg TS/d. Dabei sind die Belastungskennzahlen auf das Gesamtsystem bezogen. Trotz einer Klärflächenbelastung von 3,0 kg TS/m³/h, die hier sogar höher liegt als beim einstufigen Prozeß, ist dèr Gesamtfeststoffgehalt im Ablauf der als Eindicker gestalteten Trennvorrichtung bereits auf 0,7 kg TS/m³ abgesenkt worden. Das erfindungsgemäße Verfahren erbrachte eine Verminderung des $BSB_5$ um mehr als 90%.

Es hat sich ferner gezeigt, daß die Menge an neu gebildetem Belebtschlamm für ein Schlammalter von fünf Tagen beim einstufigen Prozeß 0,37 kg TS/kg abgebautem CSB und beim erfindungsgemäßen Prozeß nur 0,22 kg TS/kg abgebautem CSB beträgt.

CSB = chemischer Sauerstoffbedarf
TS  = Trockensubstanz des Belebtschlamms
Schlankheitsgrad = Schlaufenreaktorhöhe : Schlaufenreaktordurchmesser
$BSB_5$ = biologischer Sauerstoffbedarf in fünf Tagen

0157317

Ansprüche

1. Verfahren zur biologischen aeroben Reinigung
von Abwasser, bei dem der Belebtschlamm teilweise im Kreislauf geführt wird, d a d u r c h
g e k e n n z e i c h n e t, daß in einer ersten
Verfahrensstufe eine Temperatur von 30 bis 60 $^{o}$C
und in einer zweiten Verfahrensstufe eine Temperatur von 20 bis 40 $^{o}$C herrscht, wobei die Temperatur in der ersten Verfahrensstufe immer größer als
in der zweiten Verfahrensstufe ist, und daß ein
Teil des Belebtschlamms der zweiten Verfahrensstufe nach seiner Abtrennung in die erste Verfahrensstufe zurückgeführt wird.

2. Verfahren nach Anspruch 1, dadurch gekennzeichnet,
daß zwischen der ersten und der zweiten Verfahrensstufe eine Temperaturdifferenz von 5 bis
40 $^{o}$C, vorzugsweise 15 bis 25 $^{o}$C, herrscht.

3. Verfahren nach den Ansprüchen 1 bis 2, dadurch
gekennzeichnet, daß der in die erste Stufe
zurückgeführte Belebtschlamm durch Zufuhr von
Luft, Sauerstoff oder Wasserstoffperoxid reaktiviert wird.

4. Verfahren nach den Ansprüchen 1 bis 3, dadurch
gekennzeichnet, daß die erste Verfahrensstufe
oder beide Verfahrensstufen mit Sauerstoff oder mit
Sauerstoff angereicherter Luft betrieben werden.

5. Verfahren nach den Ansprüchen 1 bis 4, dadurch
gekennzeichnet, daß dem Abwasser Aktivkohle in
einer Menge von 5 bis 100 g/l, vorzugsweise
10 bis 30 g/l zugegeben wird.

6. Vorrichtung zur Durchführung des Verfahrens
nach den Ansprüchen 1 bis 5, dadurch gekennzeichnet, daß sie aus zwei hintereinandergeschalteten geschlossenen Schlaufenreaktoren (1,
2) mit einem Schlankheitsgrad $\geq 5$ und einer nachgeschalteten Trenneinrichtung (11) zur Abtrennung
des Belebtschlamms besteht.

7. Vorrichtung nach Anspruch 6, dadurch gekennzeichnet, daß jeder Schlaufenreaktor (1, 2)
aus mehreren hintereinandergeschalteten Reaktoren
besteht.

8. Anwendung des Verfahrens nach den Ansprüchen 1
bis 5 zur Reinigung hochbelasteter Industrieabwässer.